# EUROPÄISCHE PATENTANMELDUNG

(11) **EP 0 676 594 A2**
(43) Veröffentlichungstag der Anmeldung: **11.10.1995**
(21) Anmeldenummer: 95105369.3
(22) Anmeldetag: 10.04.1995
(51) Int. Cl.: F24D 5/12, F24D 11/02

(54) **Wärmepumpen-Gebäudeheizungsanlage**

(30) Priorität: 08.04.1994 CH 1037/94
(71) Anmelder: Miserez, Raoul, CH-4522 Rüttenen (CH); MANI + FINK AG, CH-4573 Lohn SO (CH)
(72) Erfinder: Miserez, Raoul, CH-4522 Rüttenen (CH); MANI + FINK AG, CH-4573 Lohn SO (CH)
(74) Vertreter: Morgan, James G.

(57) **Zusammenfassung**

Die Erfindung betrifft eine Wärmepumpen-Gebäudeheizungsanlage mit einem Luft-Wärmetauschevorrichtung (68), die Außenluft ansaugt, das Gebäude über einen Wasserwärmetauscher (42) mit temperierter Zuluft (18) versorgt, Abluft (20) daraus entnimmt und einen Entlüftungluftstrom (22) vorsieht, sowie mit einer Wärmepumpe (70), die einem ihrer Eingangsseite (24) zugeführten Außenluftstrom (32) Wärme entzieht und diese zur Aufheizung der Zuluft (18) bereitstellt. Es wird vorgeschlagen, daß der Entlüftungsstrom (22) dem Außenluftstrom (32) vor dessen Durchtritt durch die Wärmepumpe (24) zugemischt wird.

## Beschreibung

Die vorliegende Erfindung betrifft ein Verfahren zum Betrieb einer Wärmepumpen-Gebäudeheizungsanlage nach dem Oberbegriff von Anspruch 1 und eine Wärmepumpen-Gebäudeheizungsanlage nach dem Oberbegriff von Anspruch 4.

In jüngerer Zeit sind Bestrebungen unternommen worden, um den Energiebedarf von Gebäuden wie Wohnhäusern zu verringern. Ein Großteil der in einem Gebäude benötigten Energie wird zum Heizen der Räume sowie zur Aufheizung des Brauchwarmwassers benötigt. Dabei entstehen unweigerlich Wärmeverluste, insbesondere durch die Notwendigkeit, die Räume in regelmäßigen Abständen zu lüften, weil während des Lüftens warme Raumluft, etwa durch ein geöffnetes Fenster, abgeführt wird.

Die zum Ausgleich der Verluste zuzuführende Wärme wird im allgemeinen in einem zentralen Heizungsraum bereitgestellt und muß von dort zu den einzelnen Räumen geleitet werden. Somit entstehen nicht nur Lüftungsverluste, sondern auch Transmissionsverluste bei der Übertragung der Wärme von der zentralen Heizanlage zu den aufzuheizenden Räumen.

Es ist sowohl hinsichtlich der Betriebskosten als auch unter ökologischen Gesichtspunkten wünschenswert, den Energiebedarf für Lüftung, Heizung und Brauchwarmwasserversorgung von Gebäuden zu verringern. Der Verbreitung von Niedrigenergie-Häusern mit wünschenwert verringertem Energiebedarf stehen jedoch die hohen Anschaffungskosten von Haustechnikanlagen insbesondere von Wärmepumpen-Gebäudeheizungsanlagen entgegen, mit welchen der Energiebedarf eines Gebäudes auf ein wünschenswertes Maß verringert werden kann. Überdies nehmen die hierfür verwendeten Geräte so viel Platz ein, daß eine Umrüstung älterer Haustechnikanlagen aus Platzgründen nicht immer möglich ist.

Der Erfindung liegt die Aufgabe zugrunde, eine verbesserte Wärmeversorgung eines Gebäudes vorzusehen, wobei insbesondere eine kompakte Einheit zur Deckung des Wärmebedarfes geschaffen werden soll.

Diese Aufgabe wird mit einer Wärmepumpen-Gebäudeheizungsanlage zur Wärmeversorgung mit den Merkmalen der unabhängigen Ansprüche 1 und 4 gelöst. Dadurch, daß in die Wärme-Eingangsseite einer Wärmepumpe nicht nur ein Außenluftstrom geführt wird, dem Wärme entzogen wird, sondern erfindungsgemäß auch der aus dem beheizten Gebäude über die Luftwärmetauschervorrichtung abgezogene, noch eine höhere Temperatur als der Außenluftstrom aufweisende warme Entlüftungsstrom zugeführt wird, sinken die Wärmeverluste durch Lüftung, da ein Teil der Wärme zurückgewonnen wird, die in der Luft-Wärmetauschervorrichtung nicht auf die Frischluft übertragen werden kann. Zudem steigt aufgrund der höheren Temperatur des Wärmereservoirs, aus dem Wärme entzogen wird, der Wirkungsgrad der Wärmepumpe.

Vorteilhafterweise ist vorgesehen, daß der Luft-Wärmetauschervorrichtung ein Frischluftstrom zugeführt wird. Dieser kann beispielsweise über einen Fassaden- oder Unterdachkollektor, insbesondere Solarkollektoren vorgewärmt werden. Dies ist gegenüber einer Ausführung bevorzugt, bei der ein Teil der aus dem Gebäude abgezogenen Abluft durch Fenster- und Türritzen in den zu beheizenden Räumen nachströmt. Gleichzeitig ermöglicht die Zufuhr von Frischluft die Verwendung eines rekuperativen Doppelkreuzwärmetauschers, das heißt eines Doppelkreuzwärmetauschers, bei dem Luft durch warme Abgase vorgewärmt wird. Soviel wie möglich von der in dem Abluftstrom aus dem Gebäude enthaltenen Wärme wird somit zunächst über einen passiven Wärmetauscher auf die Frischluft übertragen. Die übertragene Wärmemenge ist jedoch begrenzt durch den Strömungswiderstand im Doppelkreuzwärmetauscher, der nicht zu hoch sein darf, damit für den Transport der Abluft nicht zuviel Energie verbraucht wird. Der Entlüftungsluftstrom aus dem Doppelkreuzwärmetauscher ist somit zwar deutlich kälter als die aus dem Gebäude abgezogene Abluft, weist aber dennoch eine merklich höhere Temperatur als der in die Wärmepumpe geförderte Außenluftstrom auf.

Vorteilhafterweise wird die aus dem Außenluft- und Entlüftungsluftstrom gepumpte Wärme zunächst in einem Wärme- bzw. Pufferspeicher gespeichert, wobei aus dem Wärmespeicher nach Bedarf Wärme zur Aufheizung des Zuluftstromes entnommen werden kann. Während prinzipiell beliebige Arten von Wärmespeichern, insbesondere Fluid-Wärmespeicher, verwendet werden können, ist es besonders vorteilhaft, einen Warmwasserboiler als Wärmespeicher zu benutzen.

Als Warmwasserboiler kann insbesondere ein ohnehin benötigter Brauchwarmwasserboiler verwendet werden. Auf diese Weise wird ein separater Warmwasserboiler vermieden. Weiter vereinfacht sich die gesamte Anlage dadurch, daß das Brauchwarmwasser auf die benötigte Temperatur von zum Beispiel 55°C gebracht wird, ohne daß zusätzliche Maßnahmen erforderlich sind. Die Wärmepumpe deckt somit aus dem Außenluft- und Entlüftungsluftstromgemisch nicht nur die Transmissions- und Lüftungsverluste des Gebäudes, sondern auch den Warmwasserbedarf im Gebäude, wozu sie entsprechend dimensioniert ist.

Weiter kann vorgesehen sein, daß im Brauchwarmwasserboiler eine Zusatzheizung wie eine Elektroheizpatrone eingebaut ist. Durch die vorteilhafte Verkopplung von Zulufttemperierung und Brauchwassererwärmung kann bei einer Störung der Wärmepumpe sowohl ein unerwünschtes Abfallen der Raumtemperatur als auch ein Fehlen von Brauchwarmwasser vermieden werden.

Vorteilhafterweise wird zwischen dem Wärmepumpenkreislauf und dem Brauchwarmwasserboiler aufgrund der großen Druckunterschiede ein Sicherheitskreislauf eingeschaltet.

Die Erfindung wird im folgenden nur beispielhaft anhand der Zeichnung erklärt. In dieser zeigen:
- Figur 1: ein Betriebsschema einer Wärmepumpen-Gebäudeheizungsanlage gemäß der Erfindung;
- Figur 2: einen schematischen Längsschnitt durch einen Teil einer erfindungsgemäßen Wärmepumpen-Gebäudeheizungsanlage, in welcher ein Großteil der in Figur 1 gezeigten Komponenten untergebracht ist;
- Figur 3: einen schematischen Horizontalschnitt im oberen Teil des in Figur 2 gezeigten Teils einer erfindungsgemäßen Wärmepumpen-Gebäudeheizungsanlage längs der Linie III-III; und
- Figur 4: einen schematischen entsprechenden Schnitt des in Figur 2 gezeigten Teils einer erfindungsgemäßen Wärmepumpen-Gebäudeheizungsanlage längs der Linie IV-IV des Gerätes von Figur 2.

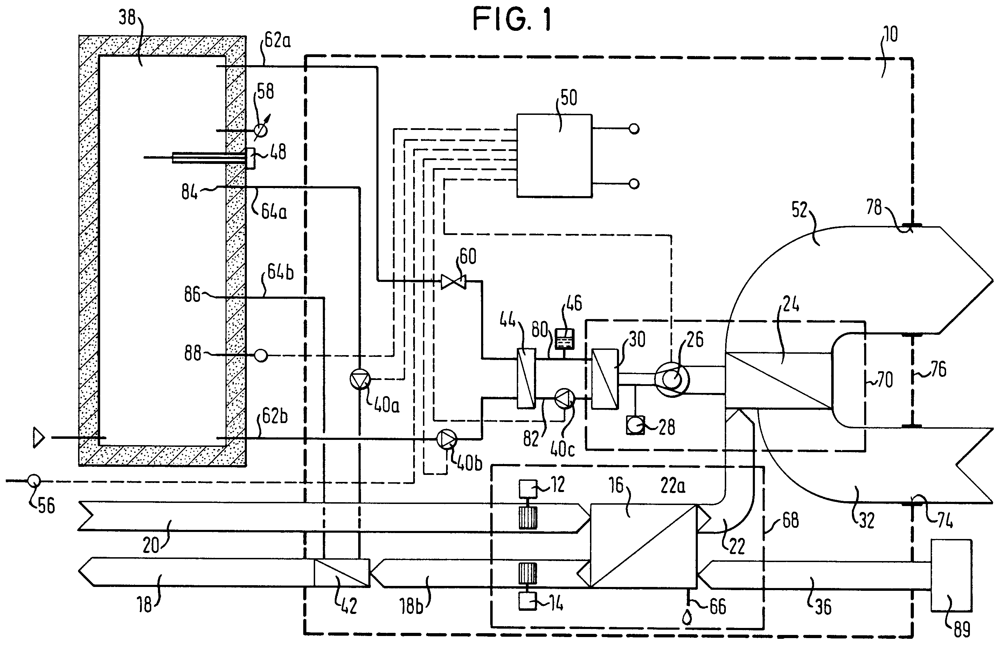

Nach Figur 1 umfaßt eine Wärmepumpen-Gebäudeheizungsanlage gemäß der Erfindung eine Luft-Wärmetauschervorrichtung 68, eine daran angeschlossene Wärmepumpe 70 mit einem Verdampfer 24, einen von der Wärmepumpe 70 über einen weiteren Wärmetauscher 44 beaufschlagten als Wärmespeicher 38 dienenden Warmwasserboiler, einen Warmwasserwärmetauscher 42, drei Pumpen 40 a, 40 b, 40 c, einen Druckregler 60 und ein Expansionsgefäß 46 sowie eine Steuerung 50.

In der Luft-Wärmetauschervorrichtung 68 wird mittels eines Ventilators 12 warme Abluft 20 aus dem zu beheizenden Gebäude in einen rekuperativen Doppelkreuzwärmetauscher 16 geführt, dem weiter insbesondere über einen Fassaden- oder Unterdachkollektor 89 vorgewärmte Frischluft 36 zugeführt wird. Aus dem Doppelkreuzwärmetauscher 16 wird mittels eines Ventilators 14 über einen Warmwasserwärmetauscher 42 temperierte Zuluft 18 in das Gebäude abgegeben sowie aus einer Entlüftungsöffnung 22 a ein Entlüftungsluftstrom 22, der im Vergleich zur Abluft 20 im rekuperativen Doppelkreuzwärmetauscher 16 abgekühlt, jedoch noch wärmer als die Außenluft ist, zusammen mit einem von außen durch einen Außenluftkanal 74 angesaugten Außenluftstrom 32 durch den Verdampfer 24 der Wärmepumpe 70 geleitet, aus dem ein abgekühlter Ausgangsluftstrom 52 in die Umgebung abgegeben wird.

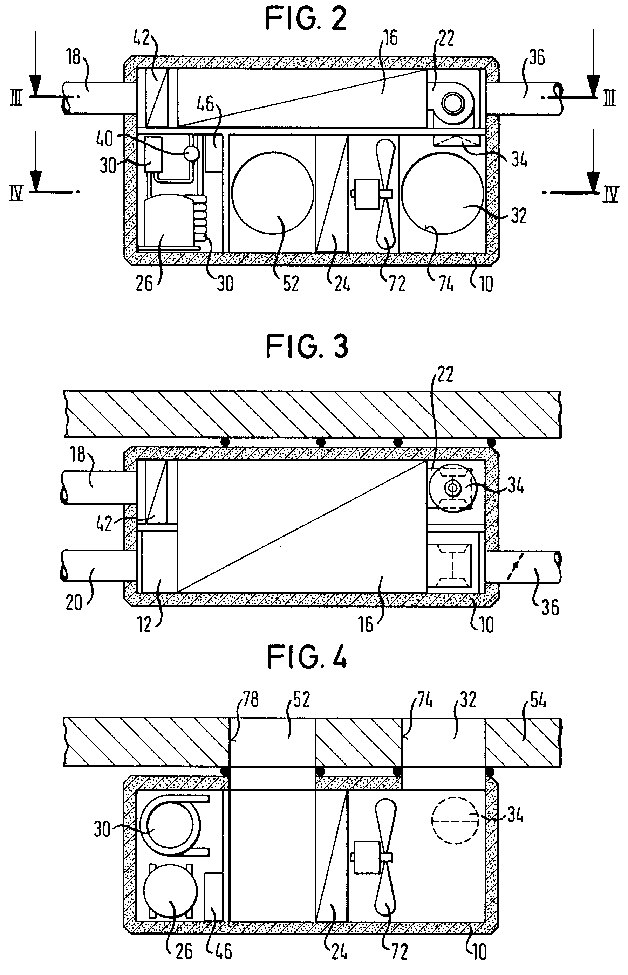

Die bauliche Ausgestaltung dieser Anordnung entnimmt man Figur 2. Danach tritt der Entlüftungsluftstrom 22 durch einen Durchlaß 34 zu dem Außenluftstrom 32, der mittels eines Ventilators 72 durch den Kanal 74 in der Gebäudewand 76 durch den Verdampfer 24 der Wärmepumpe 70 geführt wird. Der so erzeugte Mischluftstrom, der eine höhere Temperatur als die Außenluft aufweist, tritt durch den Verdampfer 24 der Wärmepumpe und gelangt danach als Kaltluftstrom 52 durch einen Austrittskanal 78 in der Gebäudewand 76 ins Freie.

Die Wärmepumpe 70 umfaßt neben dem Verdampfer 24 weiter einen Kompressor 26, einen Hochdruckpressostaten bzw. Hochhaltethermostaten 28 sowie einen Kondensator 30.

Die Ausgangsseite der Wärmepumpe 70 ist über einen Sicherheitskreislauf an der als Wärmespeicher und Pufferspeicher dienenden Brauchwarmwasserboiler 38 angeschlossen und versorgt diesen mit Wärme. Hierzu ist der Kondensator bzw. Kondensor 30 der Wärmepume 70 über Leitungen 80, 82 mit einem Wärmetauscher 44 verbunden. In einer der Leitungen 80 ist ein Expansionsgefäß 46 angeordnet, während sich in der zweiten Leitung 82 eine Pumpe 40 c befindet. Aus dem Wärmetauscher 44 gelangt erwärmtes Fluid über einen Druckregler 60 und eine Zulauf-Leitung 62 a in den oberen Teil des Warmwasserboilers 38. Vom Boiler 38 gelangt abgekühltes Fluid, insbesondere Wasser, über eine Rücklauf-Leitung 62 b und eine Pumpe 40 b zurück zum Wärmetauscher 44.

Etwa auf zwei Drittel der Höhe des Warmwasser-Boilers 38 befindet sich eine Austrittsöffnung 84, von der aus eine Pumpe 40 a Warmwasser durch eine Heizungszuleitung 64 a zum Warmwasserwärmetauscher 42 fördert, um somit eine Aufheizung des Zuluftstromes 18 vorzusehen. Aus dem Warmwasserwärmetauscher 42 gelangt das abgekühlte Fluid über eine Heizungsrücklaufleitung zurück zum Warmwasserboiler 38, wo es in etwa einem Drittel der Höhe des Speichers durch eine Durchtrittsöffnung 86 in den Warmwasserboiler 38 eintritt.

Der Warmwasserboiler 38 ist weiter mit einem Einschalt-Sensor 88 sowie einem herkömmlichen Thermometer 58 und einer Zusatzheizung 48 wie einer Elektroheizpatrone versehen. Zum gewünschten Betrieb der Wärmepumpen-Gebäudeheizungsanlage ist eine Steuerung 50 vorgesehen, die Eingangssignale beispielsweise aus einem Raumtemperatursensor 56 und dem Boilertemperatursensor 86 empfängt und den Kompressor 26 der Wärmepumpe 70 und die Pumpen 40 a bis 40 c nach Bedarf regelt.

Wie die Figuren 2, 3 und 4 zeigen, können die in Figur 1 dargestellten Komponenten mit Ausnahme des bis zu beispielsweise 600 l fassenden Warmwasserboilers 38 und der erforderlichen Zuleitungen auf vorteilhafte Weise in einer Baueinheit 10 zusammengefaßt werden.

Die vorstehend beschriebene Wärmepumpen-Gebäudeheizungsanlage arbeitet wie folgt:
Aus dem Gebäude wird Abluft 20 mittels des Ventilators 12 durch den Doppelkreuzwärmetauscher 16 geführt, in den auch Frischluft 36 eintritt. Aus dem rekuperativen Wärmetauscher 16 wird mit dem Ventilator 14 vortemperierte Zuluft 18 b in Richtung auf den Warmwasserwärmetauscher 42 und nach der darin erfolgenden Temperierung als aufgeheizte Zuluft 18 in das Gebäude gefördert. Bei der Abkühlung der warmen Abluft 20 im rekuperativen Doppelkreuzwärmetauscher 16 entstehendes Kondenswasser 66 wird abgeführt. Aus dem rekuperativen Doppelkreuzwärmetauscher 16 tritt der Entlüftungsluftstrom 22 aus, der kälter als der Abluftstrom 20 ist. Der Entlüftungsluftstrom 22 wird mit dem von außen durch den Ansaugkanal 74 angesaugten kalten Außenluftstrom 32 gemischt, um diesen zu erwärmen. Die so gebildete Luftmischung wird durch den Verdampfer 24 der Wärmepumpe 70 geführt und gelangt danach durch den Kanal 78 als Kaltluftstrom 52 wieder ins Freie. Durch die Anordnung des Gerätes 10 nahe der Gebäudewand 76 können die Kanäle 78 und 74 kurz gehalten werden.

Die in der Wärmepumpe 70 gewonnene Wärme wird über den Sicherheitskreislauf 40 c, 44, 46, 60, 80, 82 mit einer konstant geregelten Temperatur an den Boiler 38 abgegeben. Hieraus kann sie entweder in der Form erwärmten Brauchwassers entnommen werden oder zur Aufheizung der vortemperierten Zuluft 18 b dem Warmwasserwärmetauscher 42 zugeführt werden. Auf diese Weise ist nur eine Wärmepumpe 70 erforderlich, um sowohl den Bedarf an Brauchwarmwasser als auch an beheizter Warmluft zu decken.

Der Wärmefluß in der Anlage wird durch entsprechende Steuerung des Kompressors 26 und der Pumpen 40 von der Steuerung 50 geregelt. Diese kann auch vorsehen, daß die Heizpatrone 48 im Brauchwarmwasserboiler/Wärmespeicher-Kombinationsgerät bei Bedarf anspricht, etwa wenn die Wärmepumpe 70 gestört ist oder es bei extrem kalten Außenbedingungen nicht möglich ist, den Wärmebedarf des Gebäudes auf andere Weise zu decken, obwohl es ohne weiteres möglich sein wird, durch die spezielle Dimensionierung der im Gerät enthaltenen Wärmepumpe 70, des Warmwasserboilers 38 und des Warmwasserwärmetauschers 42 den Bedarf an Brauchwarmwasser und Warmluft zu decken.

Zusammenfassend besteht die Wärmepumpen-Gebäudeheizungsanlage somit zum einen aus einer Luftwärmetauschervorrichtung 68, die sich aus einem Zuluft- und einem Abluftventilator 12 und 14, einem rekuperativen Doppelkreuzwärmetauscher 16 und einem Rohrnetz für Abluft 20, Zuluft 18 und Frischluft 36 zusammensetzt, wobei die Frischluft 36 über einen Fassaden- oder Unterdachkollektor 89 vorgewärmt zugeführt werden kann. Um die anfallenden Lüftungsverluste und Transmissionsverluste im Gebäude und den Warmwasserbedarf zu decken, ist in das Gerät eine Wärmepumpe 70 eingebaut, die einen Verdampfer 24, einen Kompressor 26, einen Kondensator 30 und einen Hochdruckpressostaten 28 umfaßt. Die Wärmepumpe 70 bezieht ihre Wärme aus einem mit dem Entlüftungsluftstrom 22 gemischten Außenluftstrom 32. Die Wärme wird über einen Sicherheitskreislauf, bestehend aus Leitungen 80, 82, einer Pumpe 40 c, einem Wärmetauscher 44 und einem Expansionsgefäß 46 an den Ladekreislauf abgegeben, der wiederum aus einem Hochhaltethermostaten 88, einer Einschaltsonde 88, einer Pumpe 40 b und einem Wärmetauscher 44 besteht. Dieser Ladekreislauf versorgt den kombinierten Brauchwarmwasser/Wärmespeicherboiler 38 mit Wasser von einer konstanten Temperatur, beispielsweise etwa 55°C. Diese Temperatur wird durch den Hochhaltethermostaten 28 geregelt. Der Heizkreislauf umfaßt eine Pumpe 40 a, die Pumpenwarmwasser zu einem im Zuluftstrom 18 gelegenen Wärmetauscher 42 pumpt. Mit dem Pumpenwarmwasser wird die Zuluft auf das Temperaturniveau geheizt, das es ermöglicht, die Transmissionsverluste des Gebäudes zu decken. Um auch bei einer Störung der Wärmepumpe 70 eine ausreichende Brauchwassererwärmung aufrechtzuerhalten, ist eine Elektroheizpatrone 48 im Warmwasserboiler 38 vorgesehen. Dabei kann die ganze Anlage von einer zentralen Steuerung 50 aus geregelt werden.

### Bezugszeichenliste

- 10: Baueinheit
- 12: Ventilator
- 14: Ventilator
- 16: Doppelkreuzstromwärmetauscher
- 18: Zuluft
- 18 b: vortemperierte Zuluft
- 20: Abluft
- 22: Entlüftungsstrom
- 24: Eingangsseitiger Wärmepumpen-Verdampfer
- 26: Kompressor
- 28: Hochhaltethermostat
- 30: Kondensator
- 32: Außenluftstrom
- 34: Durchlaß
- 36: Frischluft
- 38: Warmwasserboiler
- 40a,b,c,: Pumpen
- 42: Warmwasserwärmetauscher
- 44: Wärmetauscher im Sicherheitskreislauf
- 46: Expansionsgefäß
- 48: Elektrische Zusatzheizpatrone
- 50: Steuerung
- 52: Kaltluft-Ausgangsstrom
- 54: Gebäudewand
- 56: Raumtemperatursensor
- 58: Boilertemperaturanzeige
- 60: Druckregler
- 62 a: Einlaufleitung
- 62 b: Rücklaufleitung
- 64 a: Heizungseinlauf
- 64 b: Heizungsrücklauf
- 66: Kondenswasserauslaß
- 68: Luft-Wärmetauschervorrichtung
- 70: Wärmepumpe
- 72: Ventilator
- 74: Eintrittskanal
- 78: Austrittskanal
- 80, 82: Leitungen
- 84: Boiler - Auslaßöffnung zur Heizung
- 86: Boiler - Durchlaß von Heizung
- 88: Boilersensor
- 89: Fassaden- oder Unterdach-Kollektor

## Patentansprüche

1. Verfahren zum Betrieb einer Wärmepumpen-Gebäudeheizungsanlage mit einer Luft-Wärmetauschvorrichtung (68), die Außenluft ansaugt, das Gebäude über einen Wärmetauscher (42) mit temperierter Zuluft (18) versorgt, Abluft (20) aus dem Gebäude entnimmt und einen Entlüftungstrom (22) abgibt,
einer Wärmepumpe (70), die einem ihrer Eingangsseite (24) zugeführten Außenluftstrom (32) Wärme entzieht und diese zur Aufheizung der Zuluft (18) bereitstellt,
**dadurch gekennzeichnet, daß**
der Entlüftungsluftstrom (22) dem Außenluftstrom (32) vor dessen Durchtritt durch die Wärmepumpe (24) zugemischt wird.

2. Verfahren nach Anspruch 1,
**dadurch gekennzeichnet, daß**
die aus dem Außenluftstrom (32) entzogene Wärme zunächst in von ihr erwärmtem Brauchwarmwasser gespeichert wird und mittels des erwärmten Wassers nach Bedarf die Zuluft aufgeheizt wird.

3. Verfahren nach Anspruch 1 oder 2,
**dadurch gekennzeichnet, daß**
das erwärmte Wasser auch als Brauchwasser verwendet wird.

4. Wärmepumpen-Gebäudeheizungsanlage mit einer Luft-Wärmetauschvorrichtung (68), die Außenluft ansaugt, das Gebäude über einen Wärmetauscher (42) mit temperierter Zuluft (18) versorgt, Abluft (20) aus dem Gebäude entnimmt und einen Entlüftungluftstrom (22) abgibt, einer Wärmepumpe (70), die einem ihrer Eingangsseite (24) zugeführten Außenluftstrom (32) Wärme entzieht und diese zur Aufheizung der Zuluft (18) bereitstellt,
**dadurch gekennzeichnet, daß**
der Entlüftungsstrom (22) dem Außenluftstrom (32) vor dessen Durchtritt durch die Wärmepumpe (24) zugemischt ist.

5. Wärmepumpen-Gebäudeheizungsanlage nach Anspruch 4,
**dadurch gekennzeichnet, daß**
die Luft-Wärmetauschervorrichtung (68) mit einer Frischluftzufuhr (36) für vorzugsweise vorgewärmte Frischluft von außen und einem rekuperativen Doppelkreuzwärmetauscher (16) versehen ist, in den einerseits die Frischluft (36) und die Abluft (20) eintreten und aus dem andererseits die Zuluft (18) und der Entlüftungsluftstrom (22) austreten, und daß eine Verbindung zwischen dem Doppelkreuzwärmetauscher-Entlüftungsluftstromaustritt (22 a) und einem Mischer (34) für Entlüftungsluft und angesaugte Außenluft vorgesehen ist.

6. Wärmepumpen-Gebäudeheizungsanlage nach Anspruch 4 oder 5,
**dadurch gekennzeichnet, daß**
ein von der Wärmepumpe (70) mit Wärme beaufschlagter und diese in einem Fluid speichernder Boiler (38), insbesondere Warmwasserboiler (38), vorgesehen ist, aus dem Wärme zur Aufheizung des Zuluftstromes über einen Wärmetauscher (42), insbesondere Wärmetauscher (42) entnommen werden kann.

7. Wärmepumpen-Gebäudeheizungsanlage nach Anspruch 6,
**dadurch gekennzeichnet, daß**
erwärmtes Fluid, insbesondere Warmwasser, aus dem Boiler (38) über eine Pumpe (40 a) zum Wärmetauscher (42) geführt wird.

8. Wärmepumpen-Gebäudeheizungsanlage nach Anspruch 6 oder 7, mit einem Wasserboiler (38) als Wärmespeicher,
**dadurch gekennzeichnet, daß**
der Warmwasserboiler (38) gleichzeitig als Brauchwarmwasserboiler ausgebildet und verwendet ist und das Fluid auf die benötigte Brauchwarmwassertemperatur erwärmtes Brauchwarmwasser ist.

9. Wärmepumpen-Gebäudeheizungsanlage nach einem der Ansprüche 6, 7 oder 8,
**dadurch gekennzeichnet, daß**
zwischen den Boiler (38) und die insbesondere aus einem Verdampfer (24), Kompressor (26), Hochhaltethermostat (28) und Kondenser (30) gebildete Wärmepumpe (70) ein insbesondere aus einer Pumpe (40 c), einem Wärmetauscher (44) und einem Expansionsgefäß (46) gebildeter Sicherheitskreislauf geschaltet ist.

10. Wärmepumpen-Gebäudeheizungsanlage nach einem der Ansprüche 6, 7 oder 8,
**dadurch gekennzeichnet, daß**
im Warmwasserboiler (38) eine Zusatzheizung (48), insbesondere eine elektrische Heizpatrone, angebracht ist.
